# FASCICULE DE BREVET EUROPEEN

(11) **EP 1 451 023 B1**
(45) Date de publication et mention de la délivrance du brevet: **13.04.2005**
(21) Numéro de dépôt: 02803401.5
(22) Date de dépôt: 21.11.2002
(51) Int. Cl.: B60B 3/04, B60B 3/10

(54) **DISQUE DE ROUE AUTOMOBILE, NOTAMMENT POUR VEHICULE DE TOURISME**
KRAFTFAHRZEUGRADTELLER, INSBESONDERE FÜR PERSONENKRAFTWAGEN
MOTOR VEHICLE WHEEL DISC, IN PARTICULAR FOR PRIVATE PASSENGER VEHICLE

(30) Priorité: 23.11.2001 FR 0115560
(43) Date de publication de la demande: 01.09.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: ALFF, Denis, F-63200 Riom (FR); KRUCHTEN, Wolfgang, F-63430 Les Martres d'Artiere (FR)
(74) Mandataire: Dequire, Philippe
(86) Numéro de dépôt international: PCT/EP2002/013078
(87) Numéro de publication internationale: WO 2003/043836

(56) Documents cités:
- DE-A- 2 639 483
- DE-U- 20 108 995
- US-A- 6 042 194
- US-B1- 6 231 129

## Description

L'invention a pour objet un disque de roue automobile à bras, notamment pour véhicule de tourisme, réalisé en une seule pièce à partir de tôle emboutie qui présente un excellent compromis en terme de poids, coût, style ou de liberté d'effet de style possible rapporté (enjoliveur par exemple).

Lors de la conception d'une roue en tôle pour véhicule automobile, on s'intéresse d'une manière générale à l'optimisation en poids et en coût d'un tel produit. L'évolution des techniques d'emboutissage, des moyens de simulation numérique et des matériaux a conduit à de très grands progrès au court des dernières années. Cependant, la majorité des produits est restée dans une logique de disque sensiblement axisymétrique (c'est-à-dire dont le profil en coupe est à peu près figé dans la zone de galbe), comprenant des ajours et parfois des bossages dans la partie haute.

Ce type de profil ne confère pas au produit un style ou une image très valorisante ce qui explique dans la grande majorité des cas que l'on ait recours à un enjoliveur placé sur le produit lorsqu'il est monté sur le véhicule.

On dénombre plusieurs tentatives de création de style directement à partir de la tôle constitutive du disque de roue en pratiquant des zones à emboutissage profond constituant des raidisseurs et/ou un assemblage particulier du disque avec la jante (assemblage sous siège, disque « full face » (i.e. disque dont le bord radialement extérieur inclut le crochet et le siège extérieurs de la jante), avec jante soudée en bout, etc.) et parfois associés à des effets liés à la peinture. Ces tentatives n'ont encore jamais conduit à une généralisation pour des raisons de poids excessif ou de difficultés de réalisation.

D'une manière générale, le marché des roues de style pour véhicule automobile de tourisme reste confiné dans l'utilisation d'alliages d'aluminium. Le procédé de réalisation (moulage, forgeage, etc.) de ces disques laisse une très forte liberté de style avec des poids raisonnables mais a pour contrepartie un coût de l'ordre de 4 à 8 fois (voire 10) supérieur.

Le document DE 201 08 995 U qui divulgue toutes les caractéristiques du préambule de la revendication 1, présente une roue dont le disque est réalisé à partir d'une seule pièce en tôle emboutie, avec une face extérieure et une face intérieure. Ce disque comprend une partie circulaire radialement extérieure d'assemblage destinée à être liée à une jante, une partie radialement intérieure de fixation et de centrage à un moyeu de roue avec une zone d'appui comportant un nombre donné de trous de fixation et terminée radialement intérieurement par un bord recourbé axialement extérieurement ou cheminée de centrage, et des bras reliant les parties intérieure et extérieure, chaque bras étant disposé sensiblement en regard de l'un des trous de fixation et les bords libres radialement intérieurs de la partie circulaire radialement extérieure définissant avec les bords libres latéraux des bras des ajours. Ce disque a une zone d'appui sensiblement circulaire et plane et chaque bras comporte deux éléments de raidissement latéraux s'étendant radialement de ladite zone d'appui jusqu'à la partie circulaire radialement extérieure d'assemblage et disposés de part et d'autre d'une bande intermédiaire en retrait axialement vers l'intérieur du disque.

Si la liberté d'effet de style nu ou par pièce rapportée (enjoliveur par exemple) est apparemment obtenue, un tel disque présente l'inconvénient de nécessiter une tôle relativement épaisse pour pouvoir supporter les efforts en service, notamment dans la zone de liaison entre les bras et la partie radialement intérieure de fixation et de centrage du disque.

Dans ce qui suit, on entend par :
- « face extérieure » du disque, la surface de révolution générée par la rotation autour de l'axe de rotation du disque des zones du disque disposées axialement le plus extérieurement ;
- « face interne » du disque, le côté du disque dirigé vers l'intérieur, en particulier, la face interne de la zone d'appui est destinée à être en contact avec la surface extérieure du moyeu auquel le disque doit être fixé ;
- « face externe » du disque, le côté du disque dirigé vers l'extérieur, c'est ce côté qui est visible lorsque la roue est montée sur un véhicule.

L'invention a pour objet un disque de roue similaire dans lequel, pour renforcer mécaniquement chaque bras, ladite face extérieure relie chaque bras à ladite cheminée de centrage par un pontet décalé axialement extérieurement relativement à la zone d'appui.
La géométrie particulière de la partie radialement intérieure de fixation et de centrage de ce disque a l'avantage de réduire les niveaux de contraintes maxima supportés par cette zone en service.

Selon un mode de réalisation avantageux, en considérant un plan axial médian entre deux trous de fixation adjacents, la distance axiale séparant la face interne desdits pontets et la face interne de ladite zone d'appui est en tout point supérieure à l'épaisseur initiale de la tôle constitutive du disque de roue.

De préférence, chaque poche comprend un fond et un flanc unique et fermé entourant ce fond. Chaque poche a ainsi une géométrie fermée.

Selon un mode de réalisation préférentiel, les bras présentent des bords latéraux retournés vers la face interne du disque et ont une section sensiblement en forme de M. Il est avantageux qu'à une distance radiale donnée, les bords latéraux sont décalés axialement extérieurement relativement à la face intérieure du fond de la poche du bras. Cette disposition relative a l'avantage de limiter les conséquences des maxima de contraintes sur les bras en service, en évitant que ces maxima de contraintes ne soient reportées sur les bords de découpe plus sensibles.

Selon une autre caractéristique préférentielle de l'invention, les bords des ajours sont obtenus par découpe de la tôle puis rabattement vers la face interne du disque. Cela a l'avantage de dégager un maximum de surface ajourée et de faire en sorte qu'aucune face de découpe ne soit visible du côté extérieur.

D'autre part l'esthétique ainsi obtenue est agréable et le fort ajourage apporte, outre une bonne ventilation des freins, une grande liberté de style ajouté (enjoliveur).

Les poches peuvent avantageusement avoir une forme générale ovale aplatie avec une largeur dans la direction circonférentielle diminuant continûment du trou de fixation vers la partie circulaire radialement extérieure. De même, les poches peuvent avoir une profondeur diminuant continûment de la partie radialement intérieure vers la partie circulaire radialement extérieure. Les largeur, section et inertie de flexion des bras dans la direction circonférentielle peuvent aussi avantageusement diminuer continûment de la partie radialement intérieure vers la partie circulaire radialement extérieure.

L'objet de ces aménagement est de répartir au mieux la matière dans le bras là où elle est nécessaire pour réduire les contraintes de service en fonction des sollicitations auquel ce bras est soumis.

Chaque zone d'appui autour de chaque trou de fixation peut présenter au moins deux faces distinctes d'appui. Préférentiellement, relativement à l'axe d'un trou de fixation, la zone d'appui présente une première face d'appui disposée radialement intérieurement et deux autres faces d'appui disposées axialement extérieurement et circonférentiellement de part et d'autre de l'axe du trou de fixation.

Avantageusement, le fond des poches peut présenter des zones de bombé convexe ou concave. Il peut aussi comporter des orifices découpés. Un tel orifice peut être un ajour standard ou servir pour la fixation d'une pièce de style comme un enjoliveur.

La forme finale des bras et des ajours des disques selon l'invention peut être obtenue simultanément en une ou plusieurs opérations d'emboutissage. De préférence, après avoir été découpés, les bords des ajours sont ébavurés sur une pièce emboutie avant d'être rabattus.

La partie radialement intérieure de la cheminée de centrage peut aussi comprendre des portées préférentielles d'appui en face de chaque trou de fixation ou de chaque pontet séparant les trous de fixation.

Enfin, le nombre de bras peut notamment être 3, 4, 5 ou 6.

L'invention décrit ainsi un disque de roue dont le poids et le procédé de réalisation sont similaires à ceux d'un disque acier classique optimisé pour un style se rapprochant de celui des disques en alliage moulé ou forgé.

L'invention a aussi pour objet une roue constituée par l'assemblage d'une jante et d'un disque selon l'invention.

Les disques de roue selon l'invention sont maintenant décrits à l'aide du dessin annexé dans lequel :
- la figure 1 est une vue en perspective d'une roue assemblée comportant un disque selon l'invention ;
- la figure 2 est une vue en coupe axiale de la roue de la figure 1, coupe traversant l'axe d'un trou de fixation ;
- les figures 3(a) à (c) présentent l'évolution de la section d'un bras du centre du disque vers l'extérieur ;
- la figure 4 est une vue en coupe du disque passant par les axes de deux trous de fixation adjacents ;
- la figure 5 est une vue en perspective de la face interne du disque ;
- les figures 6, 7, 8 et 9 sont des agrandissements de l'un des trous de fixation de la figure 5 et présentent quatre variantes de réalisation des faces d'appui ; et
- les figures 10, 11 et 12 sont des vues partielles de la figure 5 et présentent des variantes de réalisation de la cheminée de centrage.

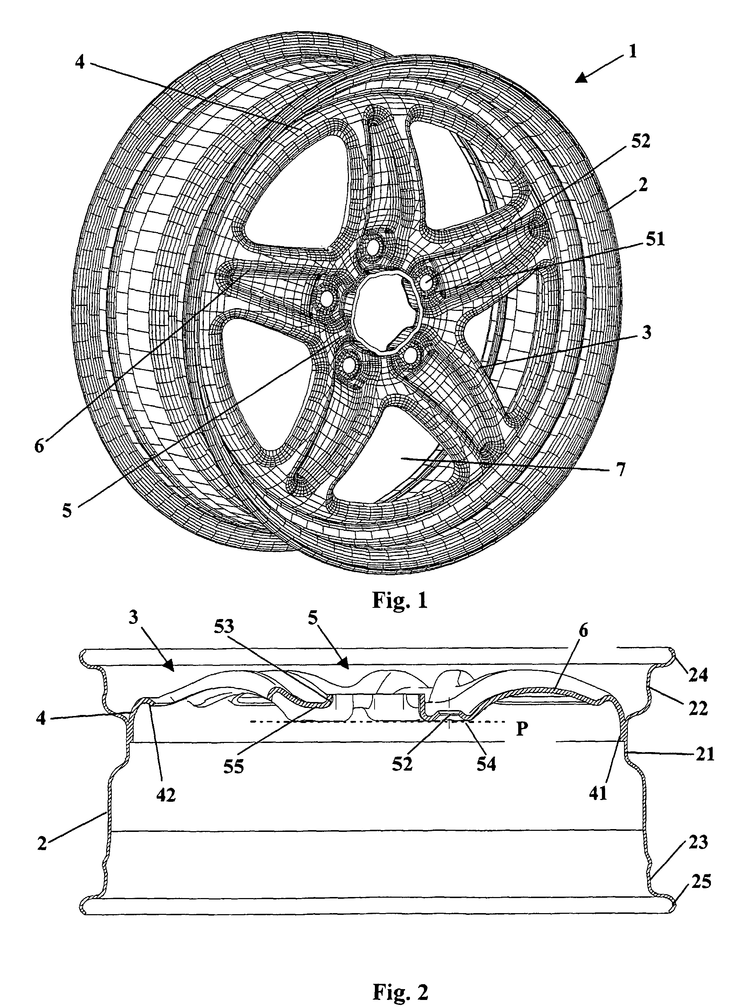

La figure 1 présente une vue en perspective du côté extérieur (ou face externe) d'une roue assemblée 1 comportant un disque 3 selon l'invention et une jante 2. La figure 2 est une coupe axiale de cette même roue passant par l'axe d'un trou de fixation. La jante 2 comprend usuellement deux crochets extérieur 24 et intérieur 25, deux sièges extérieur 22 et intérieur 23 et une gorge de montage 21.

Le disque 3 est fabriqué par un procédé de formage, notamment d'emboutissage, à partir d'un flan de tôle métallique composé de préférence d'acier à résistance élevée ou de feuillard d'aluminium. Les composants essentiels de ce disque 3 sont une partie circulaire radialement extérieure 4 d'assemblage, une partie radialement intérieure 5 de centrage et de fixation et des bras 6 de liaison entre les parties 4 et 5.

La partie 4 est la zone d'assemblage avec la jante 2 comme l'illustre la figure 2 et le bord radialement extérieur 41 de cette partie d'assemblage 4 a une direction sensiblement parallèle à l'axe de rotation du disque 3. Cette partie d'assemblage 4 est circulaire, c'est-à-dire continue circonférentiellement. L'assemblage à la jante 2 est usuellement réalisé par soudure. Cet assemblage peut avoir lieu au niveau de la gorge de montage 21 de la jante 2. Il est aussi possible d'avoir un assemblage sous le siège extérieur 22 de la jante 2.

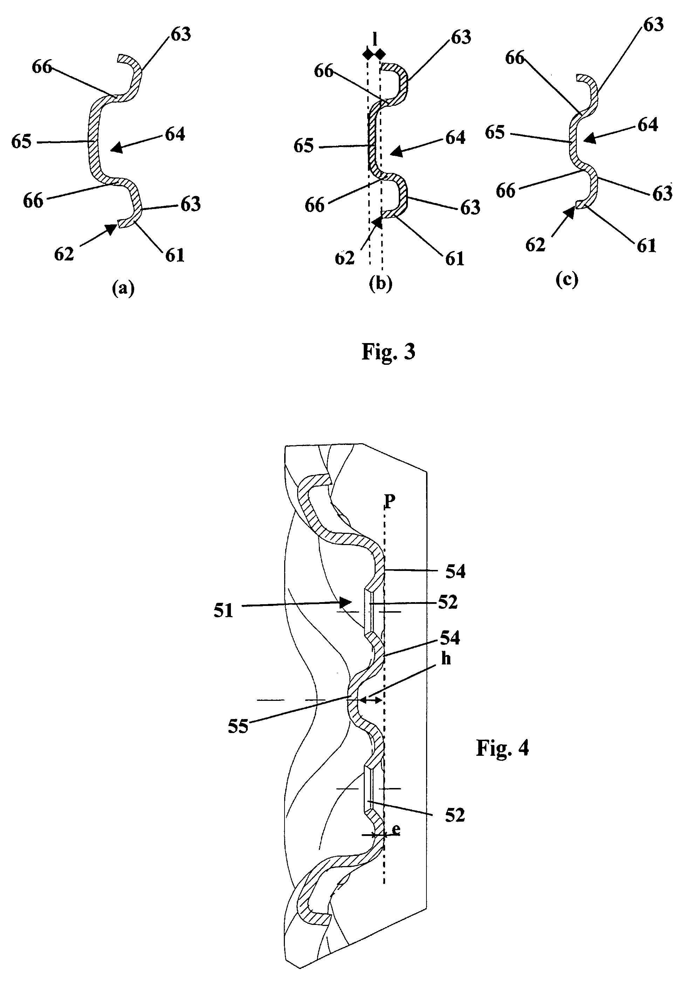

La partie de fixation et de centrage 5 comprend ici une zone d'appui 51 avec cinq trous de fixation 52 et un bord radialement intérieur recourbé axialement extérieurement en forme de collerette ou cheminée de centrage 53. Les trous de fixation 52 sont conçus pour recevoir des boulons de fixation du disque à un moyeu de véhicule. La face interne de la zone d'appui 51 comporte une face d'appui 54 destinée à venir en contact avec le moyeu du véhicule. Cette face d'appui 54 correspond au plan P. Comme le montre la figure 4, coupe du disque 3 entre deux trous de fixation 52 adjacents, la zone d'appui 51 ainsi que la face d'appui 54 sont interrompues entre les deux trous de fixation par un pontet 55. De préférence, la distance axiale h entre le plan P de la face d'appui 54 et la face intérieure du pontet 55, dans sa partie centrale, est supérieure à l'épaisseur e du flan de tôle métallique de départ. Cette épaisseur e est comprise entre 3 et 6 mm en fonction de la charge que doit supporter la roue considérée.

Les bras 6 relient les parties 4 et 5 et assurent la transmission des efforts entre ces deux parties du disque 3. Les bords latéraux de ces bras 6 définissent avec le bord radialement intérieur de la partie d'assemblage 4 des ajours 7 de grande taille.

La difficulté de réalisation d'un disque 3 de roue comportant des grands ajours 7 est de réaliser des bras 6 délimitant latéralement ces ajours suffisamment résistants aux sollicitations en fatigue qui apparaissent en fonctionnement.

Les figures 3(a) à (c) présentent l'évolution de la section d'un bras 6 de la zone de liaison avec la partie de fixation et de centrage 5 vers la partie d'assemblage 4. On voit que la section de ces bras 6 a sensiblement la forme d'un « M ». Le profil en M est obtenu par deux zones extérieures 63 avec deux bords latéraux 61 et une poche 64 disposée au centre du bras avec un fond 65 et deux flancs 66 adjacents. Les deux zones extérieures 63 font partie de la face extérieure du disque. Dans l'exemple de réalisation de la figure 1, les poches 64 ont une forme généralement ovale et incluent chacune une zone d'appui 51 avec un trou de fixation 52. Le flanc 66 englobe une partie de la cheminée de centrage et ainsi entoure complètement le fond 65, on peut ainsi dire que les poches sont fermées. Les bords libres de découpe 62 des deux bords latéraux 61 des bras 6 sont rabattus vers l'intérieur du disque ce qui complète le profil en M. De préférence, les bords libres de découpe 62 sont aussi axialement en retrait extérieurement relativement à la face interne du fond 65 de la poche 64 d'une distance 1, c'est ce qu'illustrent les figures 3(a) à (c). La hauteur axiale du flanc de renforcement 66 de la poche 64 relativement aux deux zones extérieures 63 ainsi que la largeur du fond 65 de la poche 64 diminuent progressivement lorsque la distance radiale avec l'axe du disque augmente. C'est ce que montrent les figures (a), (b) et (c).

Dans l'exemple décrit, l'ensemble des bords libres de découpe des bras 62 et de la partie d'assemblage 42 tout autour des ajours 7 sont rabattus vers la face interne du disque 3. Cela permet, outre un apport supplémentaire de rigidité, d'augmenter la surface des ajours 7 et donne un effet de style plus agréable en raison de la disparition des faces de découpe dont les arêtes vives sont peu esthétiques.

Comme les bras sont très sollicités en flexion, les contraintes les plus élevées en service sont concentrées sur les faces externes et internes du disque. Comme les arêtes de découpe sont particulièrement sensibles aux concentrations de contrainte, le fait que le rabat des bords de découpe reste en retrait à la fois des faces externes et internes des bras assure que les sollicitations subies par les arêtes de découpe restent acceptables.

Les figures 1 et 2 illustrent le fait que les zones extérieures 63 adjacentes de deux bras 6 adjacents se rejoignent au niveau de la liaison avec la partie 5 de fixation et de centrage et sont prolongées dans cette partie 5 par les pontets 55 jusqu'à la cheminée 53.

La zone 5 de fixation et de centrage est ainsi composée dans le disque de l'invention de zones d'appui 51 entourant chacune un trou de fixation 52, lesdites zones d'appui 51 adjacentes étant séparées par des pontets 55, ainsi qu'une cheminée de centrage 53.

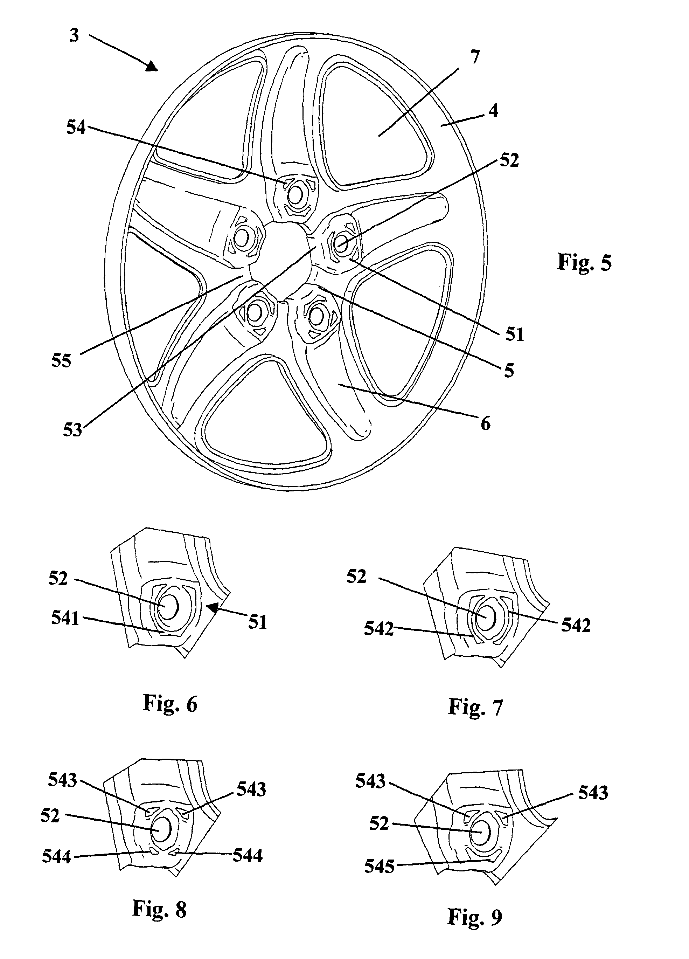

La figure 5 présente une vue en perspective de la face interne d'un exemple de réalisation du disque 3 selon l'invention. On voit en particulier la partie de fixation et de centrage 5 comprenant les cinq zones d'appui 51 disposées autour des cinq trous de fixation 52, les cinq pontets 55 et la cheminée de centrage 53.

Les figures 6 à 9 présentent quatre modes de réalisation particuliers des faces d'appui 54 des zones d'appui 51. La figure 6 illustre un premier mode dans lequel la face d'appui 541 est unique et entoure le trou de fixation 52 avec une seule interruption radialement extérieurement relativement à ce trou de fixation. A la figure 7, la face d'appui est composée de deux faces 542 disposées circonférentiellement de part et d'autre du trou de fixation 52. A la figure 8, la face d'appui est composée de quatre faces 543 et 544, deux faces 543 disposées circonférentiellement de part et d'autre et radialement extérieurement relativement à l'axe du trou de fixation 52 et deux faces 544 disposées circonférentiellement de part et d'autre et radialement intérieurement relativement à l'axe du trou de fixation 52. La face d'appui de la figure 9 comporte elle trois faces d'appui, deux faces 543 comme précédemment et une face 545 disposée radialement intérieurement relativement à l'axe du trou de fixation 52. La géométrie des faces d'appui permet de répartir les zones de concentration de contrainte dans la zone d'appui et dans le cas particulier du disque 3 illustré ici, c'est le mode de réalisation de la figure 9 qui est préférentiel.

Les efforts transmis par la flexion d'un bras sont ainsi supportés simultanément par les deux faces d'appui radialement supérieures 543, la face d'appui radialement intérieure 545 (ou 544) mais également par les faces d'appui des trous de fixations 52 adjacents via les couples pontet 55 / cheminée 53.

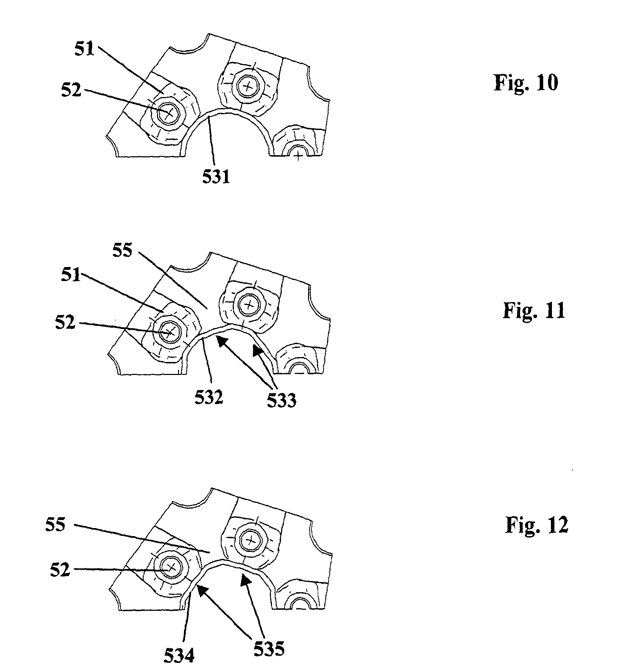

Les figures 10, 11 et 12 illustrent trois modes de réalisation particuliers de la géométrie de la cheminée de centrage 53. La figure 10 présente le mode de réalisation usuel avec une cheminée de centrage 531 circulaire. L'ensemble de la face radialement intérieure est en contact avec le nez de centrage du moyeu du véhicule.

Pour des questions de facilité de réalisation industrielle ainsi que de précision du centrage, il peut être avantageux de prévoir des portées de centrage préférentielles. La figure 11 illustre une premier exemple préférentiel. La cheminée de centrage532 comporte cinq portées de centrage 533 disposées au droit des pontets 55. A la figure 12, la cheminée de centrage 534 comporte cinq portées de centrage 535 disposées au droit des trous de fixation 52.

## Revendications

1. Disque (3) de roue, notamment pour véhicule de tourisme, réalisé à partir d'une seule pièce en tôle emboutie, avec une face extérieure et une face intérieure et comprenant :
- une partie circulaire radialement extérieure d'assemblage (4) destinée à être liée à une jante (2),
- une partie radialement intérieure de fixation et de centrage (5) à un moyeu de roue avec une zone d'appui (51) comportant un nombre donné de trous de fixation (52) et terminée radialement intérieurement par un bord recourbé axialement extérieurement ou cheminée de centrage (53, 531, 532, 534), et
- des bras (6) reliant lesdites parties intérieure (5) et extérieure (4), chaque bras (6) étant disposé sensiblement en regard de l'un des trous de fixation (52) et les bords libres (42) radialement intérieurs de la partie circulaire radialement extérieure (4) définissant avec les bords libres latéraux des bras (61) des ajours (7),
dans lequel, pour renforcer mécaniquement chaque bras (6), une poche (64) est aménagée en retrait axialement intérieurement relativement à la face extérieure du disque et ladite poche (64) s'étendant radialement à partir de la cheminée de centrage (53, 531, 532, 534) en incluant un trou de fixation (52) et la partie adjacente de la zone d'appui (51), le long de la partie centrale desdits bras et jusqu'à la partie circulaire extérieure d'assemblage (4) ;
**caractérisé en ce que** ladite face extérieure relie chaque bras (6) à ladite cheminée de centrage (53, 531, 532, 534) par un pontet (55) décalé axialement extérieurement relativement à la zone d'appui (51 ).

2. Disque selon la revendication 1, dans lequel, en considérant un plan axial médian entre deux trous de fixation (52) adjacents, la distance axiale (h) séparant la face interne desdits pontets (55) et la face interne (P) de ladite zone d'appui (51) est en tout point supérieure à l'épaisseur initiale de la tôle constitutive du disque de roue.

3. Disque selon l'une des revendications 1 et 2, dans lequel chaque poche (64) comprend un fond (65) et un flanc (66) unique et fermé entourant ledit fond.

4. Disque selon l'une des revendications 1 à 3, dans lequel lesdits bras (6) présentent des bords libres latéraux (62) retournés vers la face interne dudit disque.

5. Disque selon la revendication 4, dans lequel lesdits bras (6) ont une section sensiblement en forme de M.

6. Disque selon l'une des revendications 4 et 5, dans lequel, à une distance radiale donnée, les bords libres latéraux (62) sont décalés axialement extérieurement relativement à la face intérieure du fond (65) de ladite poche (64) dudit bras (6).

7. Disque selon l'une des revendications 1 à 6, dans lequel, les bords libres radialement intérieurs (42) de la partie circulaire d'assemblage sont rabattus vers la face interne dudit disque.

8. Disque selon l'une des revendications 1 à 7, dans lequel lesdits ajours (7) sont obtenus par découpe de ladite tôle puis par rabattement des bords (42, 62) vers la face interne du disque.

9. Disque selon l'une des revendications 1 à 8, dans lequel lesdites poches (64) ont une forme générale ovale aplatie avec une largeur dans la direction circonférentielle diminuant continûment de la partie de fixation et de centrage (5) vers la partie circulaire extérieure (4).

10. Disque selon l'une des revendications 1 à 9, dans lequel lesdites poches (64) ont une profondeur diminuant continûment de la partie de fixation et de centrage (5) vers la partie circulaire radialement extérieure (4).

11. Disque selon l'une des revendications 1 à 10, dans lequel la largeur dans la direction circonférentielle des bras (6) diminue continûment de ladite partie radialement intérieure (5) vers ladite partie circulaire radialement extérieure (4).

12. Disque selon l'une des revendications 1 à 11, dans lequel la section desdits bras (6) diminue continûment de ladite partie radialement intérieure (5) vers ladite partie circulaire radialement extérieure (4).

13. Disque selon l'une des revendications 1 à 12, dans lequel l'inertie de flexion desdits bras diminue continûment de ladite partie centrale (5) vers ladite partie extérieure (4).

14. Disque selon l'une des revendication 1 à 13, dans lequel ladite zone d'appui (51) présente autour de chaque trou de fixation (52) au moins deux faces d'appui (542, 543, 544, 545) distinctes.

15. Disque selon la revendication 14, dans lequel, relativement à l'axe d'un trou de fixation (52), ladite zone d'appui (51) présente au moins une première face d'appui (544, 545) disposée radialement intérieurement et deux autres faces d'appui (543) disposées axialement extérieurement et circonférentiellement de part et d'autre dudit axe.

16. Disque selon l'une des revendications 1 à 15, dans lequel le fond (65) desdites poches (64) présente des orifices découpés.

17. Disque selon l'une des revendications 1 à 16, dans lequel la forme finale des bras (6) et des ajours (7) est obtenue simultanément en une ou plusieurs opérations d'emboutissage.

18. Disque selon l'une des revendications 1 à 17, dans lequel, après avoir été découpés, les bords (42, 62) des ajours (7) sont ébavurés sur une pièce emboutie avant d'être rabattus.

19. Disque selon l'une des revendications 1 à 18, dans lequel la partie radialement intérieure de la cheminée de centrage (534) comprend des portées préférentielles (535) d'appui en face de chaque trou de fixation (52).

20. Disque selon l'une des revendications 1 à 19, dans lequel la partie radialement intérieure de la cheminée de centrage (532) comprend des portées préférentielles d'appui (533) en face de chaque pontet (55) séparant les trous de fixation (52).

21. Disque selon l'une des revendications 1 à 20, dans lequel le nombre de bras (6) est 3, 4, 5 ou 6.

22. Roue (1), notamment pour véhicule de tourisme, constituée par l'assemblage d'une jante (2) et d'un disque (3) selon l'une des revendications 1 à 21.

## Patentansprüche

1. Radscheibe (3), insbesondere für Personenkraftwagen, die einstückig aus einem tiefgezogenen Blech hergestellt ist, mit einer äußeren Fläche und einer inneren Fläche, und die umfasst:
- einen kreisförmigen, radial äußeren Montagebereich (4), der mit einer Felge (2) verbunden werden soll,
- einen radial inneren Bereich für die Befestigung und Zentrierung (5) an einer Radnabe mit einem Auflagebereich (51), welcher eine vorgegebene Anzahl von Bolzenlöchern (52) aufweist und radial innen durch einen axial nach außen gebogenen Rand oder Zentrierstutzen (53, 531, 532, 534) abschließt, und
- Speichen (6), die den Innenbereich (5) und den Außenbereich (4) verbinden, wobei jede Speiche (6) in etwa einem Bolzenloch (52) zugeordnet ist und die radial inneren freien Ränder (42) des kreisförmigen, radial äußeren Bereichs (4) mit den seitlichen freien Rändern der Speichen (61) Öffnungen (7) definieren,
bei der zur mechanischen Verstärkung jeder Speiche (6) eine Vertiefung (64) relativ zur Außenseite der Scheibe axial nach innen zurückversetzt ist und sich die Vertiefung (64) ausgehend von dem Zentrierstutzen (53, 531, 532, 534) einschließlich eines Bolzenlochs (52) und des angrenzenden Auflagebereichs (51) entlang des zentralen Teils der Speichen bis zu dem kreisförmigen, äußeren Montagebereich (4) erstreckt;
**dadurch gekennzeichnet, dass** die äußere Fläche jede Speiche (6) mit dem Zentrierstutzen (53, 531, 532, 534) über ein Halteböckchen (55) verbindet, das relativ zum Auflagebereich (51) axial nach außen versetzt ist.

2. Scheibe nach Anspruch 1, bei der bezüglich einer durch die Mitte von zwei benachbarten Bolzenlöchern (52) verlaufenden axialen Ebene der axiale Abstand (h) zwischen der Innenseite der Halteböckchen (55) und der Innenseite (P) des Auflagebereichs (51) in allen Punkten größer als die anfängliche Dicke des Blechs ist, aus dem die Radscheibe besteht.

3. Scheibe nach einem der Ansprüche 1 und 2, wobei jede Vertiefung (64) einen Boden (65) und eine einzige, geschlossene, den Boden umgebende Flanke (66) umfasst.

4. Scheibe nach einem der Ansprüche 1 bis 3, wobei die Speichen (6) freie Kanten (62) aufweisen, die in Richtung der Innenseite der Scheibe umgebogen sind.

5. Scheibe nach Anspruch 4, wobei die Speichen (6) einen in etwa M-förmigen Querschnitt aufweisen.

6. Scheibe nach einem der Ansprüche 4 und 5, bei der die seitlichen freien Ränder (62) in einem gegebenen radialen Abstand relativ zur Innenseite des Bodens (65) der Vertiefung (64) der Speiche (6) axial nach außen versetzt sind.

7. Scheibe nach einem der Ansprüche 1 bis 6, wobei die radial inneren freien Ränder (42) des kreisförmigen Montagebereichs in Richtung der Innenseite der Scheibe heruntergezogen sind.

8. Scheibe nach einem der Ansprüche 1 bis 7, wobei die Öffnungen (7) dadurch erhalten werden, dass das Blech geschnitten und anschließend die Ränder (42, 62) in Richtung der Innenseite der Scheibe heruntergezogen werden.

9. Scheibe nach einem der Ansprüche 1 bis 8, wobei die Vertiefungen (64) eine ovale abgeflachte allgemeine Form mit einer Breite aufweisen, die in Umfangsrichtung vom Bereich für die Fixierung und Zentrierung (5) in Richtung des kreisförmigen äußeren Bereichs (4) kontinuierlich abnimmt.

10. Scheibe nach einem der Ansprüche 1 bis 9, wobei die Vertiefungen (64) eine Tiefe aufweisen, die von dem Bereich für die Befestigung und Zentrierung (5) zu dem radial äußeren kreisförmigen Bereich (4) kontinuierlich kleiner wird.

11. Scheibe nach einem der Ansprüche 1 bis 10, wobei die Breite der Speichen (6) in Umfangsrichtung von dem radial inneren Bereich (5) zu dem radial äußeren kreisförmigen Bereich (4) kontinuierlich abnimmt.

12. Scheibe nach einem der Ansprüche 1 bis 11, wobei der Querschnitt der Speichen (6) von dem radial inneren Bereich (4) zu dem radial äußeren kreisförmigen Bereich kontinuierlich abnimmt.

13. Scheibe nach einem der Ansprüche 1 bis 12, wobei der Biegewiderstand der Speichen von dem zentralen Bereich (5) zu dem äußeren Bereich (4) kontinuierlich abnimmt.

14. Scheibe nach einem der Ansprüche 1 bis 13, wobei der Auflagebereich (51) um jedes Bolzenloch (52) mindestens zwei unterschiedliche Anlageflächen (542, 543, 544, 545) aufweist.

15. Scheibe nach Anspruch 14, wobei relativ zur Achse eines Bolzenlochs (52) der Auflagebereich (51) mindestens eine erste Anlagefläche (544, 545), die radial innen angeordnet ist, und zwei weitere Anlageflächen (543) aufweist, die axial außen und auf beiden Seiten der Achse kreisförmig angeordnet sind.

16. Scheibe nach einem der Ansprüche 1 bis 15, wobei der Boden (65) der Vertiefungen (64) ausgeschnittene Öffnungen aufweist.

17. Scheibe nach einem der Ansprüche 1 bis 16, wobei die endgültige Form der Speichen (6) und der Öffnungen (7) gleichzeitig in einem Tiefziehgang oder in mehreren Tiefziehgängen erhalten wird.

18. Scheibe nach einem der Ansprüche 1 bis 17, wobei die Ränder (42, 62) der Öffnungen (7) nach dem Schneiden an einem tiefgezogenen Teil entgratet werden, bevor sie heruntergezogen werden.

19. Scheibe nach einem der Ansprüche 1 bis 18, wobei der radial innere Bereich des Zentrierstutzens (534) Vorsprünge zur Anlage (535) gegenüber jedes Bolzenlochs (52) aufweist.

20. Scheibe nach einem der Ansprüche 1 bis 19, bei der der radial innere Bereich des Zentrierstutzens (532) Vorsprünge zur Auflage (533) an jedem Halteböckchen (55) aufweist, die die Bolzenlöcher (52) voneinander trennen.

21. Scheibe nach einem der Ansprüche 1 bis 20, bei der die Anzahl der Speichen (6) 3, 4, 5 oder 6 beträgt.

22. Rad (1), insbesondere für Personenkraftwagen, das aus der montierten Einheit aus einer Felge (2) und einer Radscheibe (3) nach einem der Ansprüche 1 bis 21 besteht.

## Claims

1. Wheel disc (3), in particular for passenger vehicle, formed from a single piece of embossed sheet metal, with an outer face and an inner face and comprising:
- a radially outer circular mounting part (4) intended to be connected to a rim (2),
- a radially inner part (5) for fixing and centring to a wheel hub with a bearing region (51) having a given number of fixing apertures (52) and ending radially inwardly with an edge bent down axially outwardly or centring vent (53, 531, 532, 534), and
- arms (6) connecting the inner (5) and outer (4) parts, each arm (6) being disposed substantially opposite to one of the fixing apertures (52) and the radially inner free edges (42) of the radially outer circular part (4) defining perforations (7) with the lateral free edges of the arms (61),
wherein, in order to reinforce each arm (6) mechanically, a pocket (64) is housed, set back radially inward relative to the outer face of the disc, the pocket (64) extending radially from the centring vent (53, 531, 532, 534) and including a fixing aperture (52) and the adjacent part of the bearing region (51) along the central part of the arms and as far as the outer circular mounting part (4), **characterised in that** the outer face connects each arm (6) to the centring vent (53, 531, 532, 534) by a yoke (55) offset axially outward relative to the bearing region (51).

2. Disc according to claim 1, wherein, taking into account a median axial plane between two adjacent fixing apertures (52), the axial distance (h) separating the internal face of the yokes (55) and the internal face (P) of the bearing region (51) is at all points greater than the initial thickness of the sheet metal forming the wheel disc.

3. Disc according to either of claims 1 or 2, wherein each pocket (64) has a floor (65) and a single, closed side (66) surrounding the floor.

4. Disc according to one of claims 1 to 3, wherein the arms (6) have free lateral edges (62) which are turned down towards the inner face of the disc.

5. Disc according to claim 4, wherein the arms (6) have a substantially M-shaped section.

6. Disc according to either of claims 4 or 5, wherein at a given radial distance, the free lateral edges (62) are offset axially outwards relative to the inner face of the floor (65) of the pocket (64) of the arm (6).

7. Disc according to one of claims 1 to 6, wherein the radially inner free edges (42) of the circular mounting part are folded down towards the inner face of the disc.

8. Disc according to one of claims 1 to 7, wherein the perforations (7) are obtained by punching the sheet metal and then folding down the edges (42, 62) towards the inner face of the disc.

9. Disc according to one of claims 1 to 8, wherein the pockets (64) have a generally flattened oval shape with a width that decreases continuously in the circumferential direction from the fixing and centring part (5) towards the outer circular part (4).

10. Disc according to one of claims 1 to 9, wherein the pockets (64) have a depth that decreases continuously from the fixing and centring part (5) to the radially outer circular part (4).

11. Disc according to one of claims 1 to 10, wherein the width in the circumferential direction of the arms (6) decreases continuously from the radially inner part (5) to the radially outer circular part (4).

12. Disc according to one of claims 1 to 11, wherein the section of the arms decreases continuously from the radially inner part (5) towards the radially outer circular part (4).

13. Disc according to one of claims 1 to 12, wherein the bending resistance of the arms decreases continuously from the central part (5) towards the outer part (4).

14. Disc according to one of claims 1 to 13, wherein the bearing region (51) has at least two distinct bearing faces (542, 543, 544, 545) around each fixing aperture (52).

15. Disc according to claim 14, wherein, relative to the axis of a fixing apertures (52), the bearing region (51) has at least one first bearing face (544, 545) disposed radially inward and two other bearing faces (543) disposed axially outward and circumferentially on either side of the axis.

16. Disc according to one of claims 1 to 15, wherein the floor (65) of the pockets (64) has punched apertures.

17. Disc according to one of claims 1 to 16, wherein the final shape of the arms (6) and of the perforations (7) is obtained simultaneously in one or more embossing operations.

18. Disc according to one of claims 1 to 17, wherein, after being cut out, the edges (42, 62) of the perforations (7) are trimmed from an embossed part before being turned down.

19. Disc according to one of claims 1 to 18, wherein the radially inner part of the centring vent (534) has preferred bearing ranges (535) opposite to each fixing aperture (52).

20. Disc according to one of claims 1 to 19, wherein the radially inner part of the centring vent (532) has preferred bearing ranges (533) opposite to each yoke (55) separating the fixing apertures (52).

21. Disc according to one of claims 1 to 20, wherein the number of arms (6) is 3, 4, 5 or 6.

22. Wheel (1), in particular for passenger vehicle, formed of an assembly of a rim (2) and a disc (3) according to one of claims 1 to 21.
